(19) **Europäisches Patentamt**

**European Patent Office**

**Office européen des brevets**

(11) **EP 1 282 946 B1**

(12) **EUROPÄISCHE PATENTSCHRIFT**

(45) Veröffentlichungstag und Bekanntmachung des Hinweises auf die Patenterteilung:
**27.10.2004 Patentblatt 2004/44**

(21) Anmeldenummer: **01943398.6**

(22) Anmeldetag: **17.05.2001**

(51) Int Cl.⁷: $H04B\ 7/005$

(86) Internationale Anmeldenummer:
**PCT/EP2001/005681**

(87) Internationale Veröffentlichungsnummer:
**WO 2001/091321 (29.11.2001 Gazette 2001/48)**

(54) **VERFAHREN ZUR ERMITTLUNG DER VERSTÄRKUNGSFAKTOREN EINES DATENKANALS UND EINES KONTROLLKANALS EINES DATENÜBERTRAGUNGSSYSTEMS**

METHOD FOR DETERMINING AMPLIFICATION FACTORS IN A DATA CHANNEL AND A CONTROL CHANNEL OF A DATA TRANSFER SYSTEM

PROCEDE DE DETERMINATION DES FACTEURS D'AMPLIFICATION D'UN CANAL DE DONNEES ET D'UN CANAL DE COMMANDE D'UN SYSTEME DE TRANSMISSION DE DONNEES

(84) Benannte Vertragsstaaten:
**DE FR GB IT**

(30) Priorität: **19.05.2000 EP 00110730**

(43) Veröffentlichungstag der Anmeldung:
**12.02.2003 Patentblatt 2003/07**

(60) Teilanmeldung:
**04017400.5**

(73) Patentinhaber: **SIEMENS AKTIENGESELLSCHAFT
80333 München (DE)**

(72) Erfinder: **RAAF, Bernhard
81475 München (DE)**

(56) Entgegenhaltungen:
**EP-A- 0 881 786**

- **"Universal Mobile Telecommunications System (UMTS); Physical layer procedures (FDD) (3g ts 25.214 version 3.2.0 Release 1999)" ETSI TS 125 214 V3.2.0 (2000-03), März 2000 (2000-03), Seiten 1-42, XP002179166 in der Anmeldung erwähnt**
- **ERICSSON: "Amplitude differences between uplink DPCCH and DPDCHs" TSG-RAN WORKING GROUP 1 MEETING 4, 18. April 1999 (1999-04-18), XP002167844 Japan**

**Beschreibung**

Die Erfindung betrifft ein Verfahren zur Ermittlung der Verstärkungsfaktoren, eines Datenkanals und eines Kontrollkanals eines Datenübertragungssystems, insbesondere eines Mobilfunksystems.

Aus der WO99/56410 ist ein Verfahren zur Datenübertragung mit Unterbrechungsphasen bekannt. Dieses Dokument offenbart ein Verfahren zur Datenübertragung in einem Kommunikationssystem, insbesondere in einem CDMA-Mobilfunksystem, wobei die Daten strukturiert in Rahmen übertragen werden und wobei eine Sendestation die Daten derart sendet, daß es einer die Daten empfangenden Empfangsstation möglich ist, während einer oder mehrerer Unterbrechungsphasen, in der bzw. in denen sie das Empfangen und/oder das Verarbeiten empfangener Daten unterbricht, andere Funktionen auszuführen, insbesondere über eine Empfangseinrichtung Messungen durchzuführen. Dabei werden Daten (beispielsweise Sprachdaten, Bilddaten oder Systemdaten) auf Übertragungsstrecken beispielsweise mit Hilfe von elektromagnetischen Wellen über eine Luft- oder Funkschnittstelle zwischen Sendestationen und Empfangsstationen übertragen. Die beim Senden übertragenen Daten sind dabei in Rahmen (frames), welche ihrerseits wiederum in Schlitze (slots) untergliedert sind, strukturiert, die jeweils eine vorgegebene Länge haben. Insbesondere bei unterschiedlichen Diensten, wie Sprachdatenübertragung und Videodatenüber-tragung, können die Rahmen auch unterschiedliche Struktur und Länge haben. In Kommunikationssystemen, in denen im Wesentlichen kontinuierlich zwischen einer Sendestation und einer Empfangsstation gesendet wird, muß die Empfangsstation gelegentlich auch andere Funktionen als Datenempfang ausführen, die zumindest beim Betrieb nur einer einzigen Empfangseinrichtung nicht gleichzeitig ausgeführt werden können. Insbesondere muß die Mobilstation in einem zellular aufgebauten mobilen Funk-Kommunikationssystem, in dem die Basisstationen verschiedener Zellen auf unterschiedlichen Frequenzen senden, von Zeit zu Zeit messen, ob sie Funksignale von einer anderen Basisstation mit guter Empfangsqualität empfangen kann. Hierzu stellt die Mobilstation ihre Empfangseinrichtung auf eine andere Frequenz als die Frequenz ein, auf der sie momentan Daten empfängt. Um ohne Unterbrechung von der Basisstation zu der Mobilstation senden zu können, ist es daraus bekannt, daß die Sendestation das Senden zu vorgegebenen Zeiten unterbricht, um es der Empfangsstation zu ermöglichen, eine Nachbarkanalsuche über ihre einzige Empfangseinrichtung durchzuführen. Um einen Datenverlust zu vermeiden, sendet die Basisstation (Sendestation) die Daten zuvor oder danach - in einem sogenannten Komprimiermodus - mit einer höheren Senderate als mit der im wesentlichen konstanten Dauer-Senderate im sogenannten Normalmodus. Damit dies nicht zu höheren Bitfehlerraten (BER) führt, kann zusätzlich während dieser Zeit die Sendeleistung erhöht werden. Auch im Uplink also für die Daten die von der Mobilstation zur Basisstation gesendet werden, muss in ähnlicher Weise eine solche Unterbrechungsphase zu vorgegebenen Zeiten eingefügt werden, insbesondere wenn die Mobilstation nur mit einem Synthesizer ausgerüstet ist, welcher sowohl für die Generierung der Empfangs- als auch der Sende- Frequenz eingesetzt wird. Um einen Datenverlust zu vermeiden, sendet dann auch die Mobilstation (Sendestation) die Daten zuvor oder danach - im sogenannten Komprimiermodus - mit einer höheren Senderate als mit der im wesentlichen konstanten Dauer-Senderate im sogenannten Normalmodus. Damit dies nicht zu höheren Bitfehlerraten (BER) führt, kann zusätzlich während dieser Zeit die Sendeleistung erhöht werden.

Aus "3rd Generation Partnership Project; Technical Specification Group Radio Access Network; Physical layer procedures (FDD), 3G TS 25.214 V3.2.0 (2000-03) (Release 1999), insbesondere Absatz 5.1.2.5" ist folgendes Verfahren zur Ermittlung der Verstärkungsfaktoren eines Datenkanals DPDCH (Dedicated Physical Data Channel) und eines Kontrollkanals DPCCH (Dedicated Physical Control Channel) bekannt. Datenkanäle und Kontrollkanäle basieren dabei auf einer Abbildung physikalischer Übertragungsressourcen auf logische Kanäle durch an sich bekannte Multiplexverfahren, wie beispielsweise TDMA, FDMA oder CDMA. Zur Beschreibung der über die Datenkanäle übertragenen Dienste bzw. Daten sind sogenannte Transport Format Combinations TFC vorgesehen, welche die Art der über den entsprechenden Datenkanal und somit die dafür erforderliche Datenrate, das dafür vorgesehene Codierverfahren und/oder die dafür erforderliche Übertragungsqualität angibt. Zur Erfüllung dieser Anforderungen erfolgt in einer Mobilstation eine entsprechende Anpassung der Verstärkungsfaktoren $\beta_c$ (Verstärkungsfaktor für Kontrollkanal) und $\beta_d$ (Verstärkungsfaktor für Datenkanal)an die jeweiligen TFCs. Die Leistung des Kontrollkanals wird dabei durch Leistungseinstellinformationen so geregelt, daß die Empfangsleistung an der Basisstation trotz variierender Kanaleigenschaften im wesentlichen konstant bleibt. Die Leistung des Datenkanals wird den Anforderungen der verschiedenen TFCs angepaßt; dies geschieht dadurch, daß das Amplitudenverhältnis zwischen Daten- und Kontrollkanal durch das Verhältnis der Verstärkungsfaktoren, also durch $\beta_d/\beta_c$, eingestellt wird. Die Verstärkungsfaktoren sind dabei so definiert, daß sie sich durch eine begrenzte Anzahl von Bits darstellen lassen. In der Signalverarbeitung wird der Signalstrom für den Daten- und Kontrollkanal typischerweise mit diesen Verstärkungsfaktoren multipliziert und dadurch das Verstärkungsverhältnis realisiert. Durch die Beschränkung auf eine geringe Bitanzahl kann dieser Multiplikator kostengünstig implementiert werden. Diese Verstärkungsfaktoren können somit auch als Amplitudenverstärkungsfaktoren aufgefaßt werden. Dieses Vorgehen hat andererseits den Nachteil, daß die Leistung nur mit einer gewissen Quantisierung, die aus der Bitbreite folgt eingestellt werden kann.

Im Normalmodus sind folgende zwei Verfahren zur Steuerung der Verstärkungsfaktoren des Datenkanals (DPDCH) und des Kontrollkanals (DPCCH) vorgesehen:

- $\beta_c$ und $\beta_d$ werden der Mobilstation für den jeweiligen TFC signalisiert, oder
- $\beta_c$ und $\beta_d$ werden in der Mobilstation für den jeweiligen TFC basierend auf signalisierten Referenz-Verstärkungsfaktoren $\beta_{c,ref}, \beta_{d,ref}$, welche für einen anderen TFC direkt gelten, berechnet.

Falls die Verstärkungsfaktoren $\beta_c$ und $\beta_d$ signalisiert werden, so werden diese signalisierten Verstärkungsfaktoren im Normalmodus direkt für die Einstellung des Amplitudenverhältnisses zwischen dem DPCCH und den DPDCHs verwendet.

Falls die Verstärkungsfaktoren $\beta_c$ und $\beta_d$ im Normalmodus für bestimmte TFCs aus signalisierten Referenz-Verstärkungsfaktoren berechnet werden, so wird durch folgende Beziehung ein Nominalverhältnis $A_j$ berechnet:

$$A_j = \frac{\beta_{d,ref}}{\beta_{c,ref}} \cdot \sqrt{\frac{L_{ref}}{L_j}} \sqrt{\frac{K_j}{K_{ref}}},$$

wobei

$\beta_{c,ref}, \beta_{d,ref}$ : signalisierte Referenz-Verstärkungsfaktoren für Referenz-TFC;

$\beta_{c,j}, \beta_{d,j}$ : Verstärkungsfaktoren für $j$-ten TFC;

$L_{ref}$ : Anzahl der für den Referenz-TFC benützten DPDCHs;

$L_{,j}$ : Anzahl der für den $j$-ten TFC benützten DPDCHs;

$K_{ref}$ : Maß für den Leistungsbedarf pro DPDCH des Referenz-TFCs, welches im Wesentlichen die Datenraten, Codierungsgewinne und Übertragungsqualitätsanforderungen der in dem relevanten TFC gemeinsam übertragenen Datenströme berücksichtigt;

$K_j$ : Maß für Leistungsbedarf pro DPDCH des j-ten TFCs, welches im Wesentlichen die Datenraten, Codierungsgewinne und Übertragungsqualitätsanforderungen der in dem relevanten TFC gemeinsam übertragenen Datenströme berücksichtigt.

Die konkrete Berechnung der Größen $K_{ref}$ und $K_j$ ist dabei ebenfalls in der genannten Spezifikation "3rd Generation Partnership Project; Technical Specification Group Radio Access Network; Physical layer procedures (FDD), 3G TS 25.214 V3.2.0 (2000-03) (Release 1999), insbesondere Absatz 5.1.2.5.3

Computed gain factors" beschrieben. Dabei wird der Einfluss der Codierungsgewinne und Übertragungsqualitätsanforderungen eines einzelnen Datenstrom Nr. $i$ der in dem relevanten TFC gemeinsam übertragenen Datenströme durch einen Parameter $RM_i$,

das sogenannte Semi-statische Ratenanpassungs-Attribut (semi-static rate matching attribute) ausgedrückt. Dieser Parameter wird typischerweise für jeden Datenstrom signalisiert.

Daraus ergeben sich durch Rundung gemäß folgender Beziehungen die Verstärkungsfaktoren für den $j$-ten TFC:

- Wenn $A_j > 1$, dann $\beta_{d,j} = 1.0$ und $\beta_{c,j} = \lfloor 1/A_j \rfloor$, wobei $\lfloor \cdot \rfloor$ Rundung auf den nächst niedrigeren quantisierten Verstärkungsfaktor bedeutet. Da $\beta_{c,j}$ nicht auf Null gesetzt werden darf, soll $\beta_{c,j}$ falls obige Rundung den Wert 0 ergeben würde auf den niedrigsten quantisierten Verstärkungsfaktor 0.0667 gesetzt werden, wie in TS 25.213 der oben angegebenen Quelle spezifiziert.
- Wenn $A_j \leq 1$, dann $\beta_{d,j} = \lceil A_j \rceil$ und $\beta_{c,j} = 1.0$, wobei $\lceil \cdot \rceil$ Rundung auf den nächst höheren quantisierten Verstärkungsfaktor bedeutet.

Die quantisierten Verstärkungsfaktoren sind in "3rd Generation Partnership Project; Technical Specification Group Radio Access Network; Spreading and Modulation (FDD), 3G TS 25.213 V3.2.0 (2000-03) (Release 1999), Absatz 4.2.1, Tabelle 1" spezifiziert.

Die im Komprimiermodus verwendeten Verstärkungsfaktoren für einen TFC ergeben sich aus den Verstärkungsfaktoren, welche im Normalmodus für diesen TFC verwendet werden. Dazu wird durch folgende Beziehung ein korrigiertes Nominalverhältnis $A_{c,j}$ berechnet:

$$A_{C,j} = \frac{\beta_{d,j}}{\beta_{c,j}} \cdot \sqrt{\frac{15 \cdot N_{pilot,C}}{N_{slots,C} \cdot N_{pilot,N}}};$$

wobei gilt:

$\beta_{c,j}$ und $\beta_{d,j}$ : Verstärkungsfaktoren für den $j$-ten TFC im Normalmodus (wie oben beschrieben signalisiert oder berechnet);

$N_{pilot,C}$ : Anzahl der pilot bits pro slot im Komprimiermodus;

$N_{pilot,N}$ : Anzahl der pilot bits per slot Normalmodus;

$N_{slots,C}$ : Anzahl der für die Übertragung der Daten verwendeten slots im komprimierten Rahmen.

$\beta_{c,C,j}$ und $\beta_{d,C,j}$, *die* Verstärkungsfaktoren für den *j*-ten TFC im Komprimiermodus, ergeben sich dann durch Rundung gemäß folgender Regeln:

Wenn $A_{C,j} > 1$, dann $\beta_{d,C,j} = 1.0$ und $\beta_{c,C,j} = \lfloor 1/A_{C,j} \rfloor$, wobei $\lfloor \cdot \rfloor$ Rundung auf den nächst niedrigeren quantisierten Verstärkungsfaktor bedeutet. Da $\beta_{c,C,j}$ nicht auf Null gesetzt werden darf, soll $\beta_{c,C,j}$ falls obige Rundung den Wert 0 ergeben würde auf den niedrigsten quantisierten Verstärkungsfaktor 0.0667 gesetzt werden, wie in TS 25.213 der oben angegebenen Quelle spezifiziert.

Wenn $A_{Cj} \leq 1$, dann $\beta_{d,C,j} = \ulcorner A_{C,j} \urcorner$ und $\beta_{c,C,j} = 1.0$, wobei $\ulcorner \cdot \urcorner$ Rundung auf den nächst höheren quantisierten Verstärkungsfaktor bedeutet.

Die quantisierten Verstärkungsfaktoren sind in "3rd Generation Partnership Project; Technical Specification Group Radio Access Network; Spreading and Modulation (FDD), 3G TS 25.213 V3.2.0 (2000-03) (Release 1999), Absatz 4.2.1, Tabelle 1" spezifiziert.

Der Nachteil dieses bekannten Verfahrens zur Berechnung des Verstärkungsfaktors im Komprimiermodus aus berechneten Verstärkungsfaktoren im Normalmodus liegt darin, daß durch die dabei durchgeführte zweifache Rundung bzw. Diskretisierung erstens ein hoher Berechnungsaufwand entsteht und zweitens das Endergebnis einen relativ großen Fehler aufweist.

Der Erfindung liegt daher die Aufgabe zugrunde, ein gegenüber dem Stand der Technik genaueres und aufwandsgünstigeres Verfahren zur Ermittlung der Verstärkungsfaktoren eines Datenkanals und eines Kontrollkanals eines Datenübertragungssystems anzugeben.

Diese Aufgabe wird durch die Merkmale der unabhängigen Ansprüche gelöst. Vorteilhafte und zweckmäßige Weiterbildungen ergeben sich aus den abhängigen Ansprüchen, welche in Kombination mit jedem der unabhängigen Ansprüche im Rahmen der Erfindung liegen.

Erfindungsgemäß wird also im Komprimiermodus aus dem Nominalverhältnis ($A_j$) (anstatt wie im Stand der Technik aus den im Normalmodus verwendeten Verstärkungsfaktoren) ein korrigiertes Nominalverhältnis ($A_{c,j}$) berechnet und daraus mittels Rundung Verstärkungsfaktoren ($\beta_{c,C,j}$, $\beta_{d,C,j}$) bestimmt. Je nach Wertebereich der Verstärkungsfaktoren ist statt "Rundung" auch der Begriff "Diskretisierung" oder "Quantisierung" angebracht bzw. passender.

Die Erfindung beruht demnach auf dem Gedanken, den aus der Rundung oder Quantisierung der Verstärkungsfaktoren resultierenden Nachteil einer ungenauen Leistungseinstellung möglichst gering zu halten, indem die unvermeidliche Rundung oder Quantisierung derart, insbesondere an einer Stelle des Gesamtverfahrens, durchgeführt wird, daß eine möglichst geringe Ungenauigkeit erreicht wird.

Die Erfindung kann dabei insbesondere dann angewendet werden, wenn im Normalmodus Referenz-Verstärkungsfaktoren statt Verstärkungsfaktoren signalisiert bzw. verwendet werden; bei der Signalisierung von Verstärkungsfaktoren im Normalmodus basieren vorteilhafterweise auch die Verstärkungsfaktoren im Komprimiermodus auf diesen signalisierten Verstärkungsfaktoren. Dadurch wird statt der aufeinanderfolgenden zwei Rundungsoperationen, wie es im Stand der Technik vorgesehen ist, zur Ermittlung eines Verstärkungsfaktors im Komprimiermodus nur eine Rundungsoperation durchgeführt, wodurch die erforderliche Rechenkomplexität verringert wird und die berechneten Verstärkungsfaktoren in der Regel eine höhere Genauigkeit aufweisen.

Eine bevorzugte Ausführung der Erfindung sieht vor, daß im Normalmodus entweder eine Signalisierung oder eine Berechnung, welche insbesondere eine Rundungsoperation umfaßt, der Verstärkungsfaktoren eines Datenkanals und/oder eines Kontrollkanals erfolgt. Falls im Normalmodus beispielsweise'ein signalisierter Verstärkungsfaktor ($\beta_{c,j}$, $\beta_{d,j}$) verwendet wird, so ergibt sich auch der entsprechende Verstärkungsfaktor ($\beta_{c,C,j}$, $\beta_{d,C,j}$) im Komprimiermodus aus den signalisierten Verstärkungsfaktoren ($\beta_{c,j}$, $\beta_{d,j}$) des Normalmodus durch eine Korrekturberechnung. Falls aber im Normalmodus berechnete Verstärkungsfaktoren ($\beta_{c,j}$, $\beta_{d,j}$) verwendet werden, welche insbesondere aus signalisierten Referenz-Verstärkungsfaktoren berechnet werden, so ergibt sich der entsprechende Verstärkungsfaktor ($\beta_{c,C,j}$, $\beta_{d,C,j}$) im Komprimiermodus nicht aus diesen berechneten Verstärkungsfaktoren des Normalmodus durch eine Korrekturberechnung, sondern aus einem berechneten Nominalverhältnis ($A_j$), insbesondere durch eine Korrekturberechnung des Nominalverhältnisses ($A_j$) mit anschließender Rundung bzw. Diskretisierung des sich aus dieser Korrektur ergebenden korrigierten Nominalverhältnisses ($A_{C,j}$). Das Nominalverhältnis ($A_j$) wird dabei insbesondere aus signalisierten Referenz-Verstärkungsfaktoren berechnet.

Die Erfindung wird im Folgenden anhand eines bevorzugten Ausführungsbeispiels näher beschrieben.

Falls die Verstärkungsfaktoren $\beta_c$ und $\beta_d$ im Normalmodus signalisiert werden, so erfolgt deren Bestimmung im Komprimiermodus gemäß dem Stand der Technik.

Falls für bestimmte TFCs die Verstärkungsfaktoren im Normalmodus aus dem Nominalverhältnis $A_j$ und somit aus Referenz-Verstärkungsfaktoren durch die Beziehung

$$A_j = \frac{\beta_{d,ref}}{\beta_{c,ref}} \cdot \sqrt{\frac{L_{ref}}{L_j}} \sqrt{\frac{K_j}{K_{ref}}}$$

und anschließende Rundung berechnet werden (siehe oben), so werden - anders als im Stand der Technik - im Komprimiermodus die Verstärkungsfaktoren nicht aus den Verstärkungsfaktoren des Normalmodus ermittelt, sondern in Abhängigkeit von dem im Normalmodus ermittelten Nominalverhältnis $A_j$ ermittelt. Im Komprimiermodus bestimmen sich dann die Verstärkungsfaktoren $\beta_{c,C,j}$ und $\beta_{d,C,j}$ nicht aus den gerundeten Verstärkungsfaktoren des Normalmodus sondern aus einem korrigierten Nominalverhältnis $A_{C,j}$:

$$A_{C,j} = A_j \cdot \sqrt{\frac{15 \cdot N_{pilot,C}}{N_{slots,C} \cdot N_{pilot,N}}},$$

wobei gilt:

$A_j$ : Nominalverhältnis im Normalmodus;

$N_{pilot,C}$ : Anzahl der pilot bits pro slot im Komprimiermodus;

$N_{pilot,N}$ : Anzahl der pilot bits per slot im Normalmodus;

$N_{slots,C}$ : Anzahl der für die Übertragung der Daten verwendeten slots im komprimierten Rahmen.

$\beta_{c,C,j}$ und $\beta_{d,C,j}$ , die Verstärkungsfaktoren für den *j-ten* TFC im Komprimiermodus, ergeben sich dann durch Rundung gemäß folgender Regeln:

Wenn $A_{C,j}> 1$, dann $\beta_{d,C,j} = 1.0$ und $\beta_{c,C,j} = \lfloor 1/A_{C,j} \rfloor$, wobei $\lfloor \cdot \rfloor$ Rundung auf den nächst niedrigeren quantisierten Verstärkungsfaktor bedeutet. Da $\beta_{c,C,j}$ nicht auf Null gesetzt werden darf, soll $\beta_{c,C,j}$ falls obige Rundung den Wert 0 ergeben würde auf den niedrigsten quantisierten Verstärkungsfaktor 0.0667 gesetzt werden, wie in TS 25.213 der oben angegebenen Quelle spezifiziert.

Wenn $A_{C,j} \leq 1$, dann $\beta_{d,C,j} = \lceil A_{C,j} \rceil$ und $\beta_{c,C,j} = 1.0$, wobei $\lceil \cdot \rceil$ Rundung auf den nächst höheren quantisierten Verstärkungsfaktor bedeutet.

Die quantisierten Verstärkungsfaktoren sind in "3rd Generation Partnership Project; Technical Specification Group Radio Access Network; Spreading and Modulation (FDD), 3G TS 25.213 V3.2.0 (2000-03) (Release 1999), Absatz 4.2.1, Tabelle 1" spezifiziert.

Neben den oben erläuterten Ausführungsvarianten der Erfindung liegt eine Vielzahl weiterer Ausführungsvarianten im Rahmen der Erfindung, welche hier nicht weiter beschrieben werden, aber anhand der erläuterten Ausführungsbeispiele einfach in die Praxis umgesetzt werden können.

**Patentansprüche**

1. Verfahren zur Ermittlung der Verstärkungsfaktoren eines Datenkanals und eines Kontrollkanals eines Datenübertragungssystems,

   - bei dem die Datenübertragung in einem Normalmodus oder einem Komprimiermodus erfolgt,
   - bei dem im Normalmodus aus signalisierten Referenz-Verstärkungsfaktoren für eine Referenz-Transport Format Combination TFC ein Nominalverhältnis berechnet wird, und daraus mittels Rundung Verstärkungsfaktoren für eine j-te TFC bestimmt werden,

   **dadurch gekennzeichnet, dass**

   - im Komprimiermodus aus dem Nominalverhältnis ein korrigiertes Nominalverhältnis berechnet wird, und daraus mittels Rundung oder Diskretisierung gerundete oder diskretisierte Verstärkungsfaktoren bestimmt werden.

2. Verfahren nach Anspruch 1,

   - bei dem das Nominalverhältnis $A_j$ durch folgende Beziehung bestimmt ist:

   $$A_j = \frac{\beta_{d,ref}}{\beta_{c,ref}} \cdot \sqrt{\frac{L_{ref}}{L_j}} \sqrt{\frac{K_j}{K_{ref}}},$$

   wobei

   $\beta_{c,ref}$ ,$\beta_{d,ref}$ : signalisierte Referenz-Verstärkungsfaktoren für Referenz-TFC;

   $\beta_{c,j}$ , $\beta_{d,j}$ : Verstärkungsfaktoren für die *j-te* TFC;

   $L_{ref}$ :Anzahl der für den Referenz-TFC benützten DPDCHs;

   $L_j$ : Anzahl der für die *j-te* TFC benützten DPDCHs;

   $K_{ref}$ : Maß für Leistungsbedarf pro DPDCH der Referenz-TFCs, welches im Wesentlichen die Datenraten, Codierungsgewinne und Übertragungsqualitätsanforderungen der in der relevanten TFC gemeinsam übertragenen Datenströme berücksichtigt;

   $K_j$ : Maß für Leistungsbedarf pro DPDCH der j-ten TFCs, welches im wesentlichen die Datenraten, Codierungsgewinne und Übertragungsqualitätsanforderungen der in dem relevanten TFC gemeinsam übertragenen Datenströme berücksichtigt.

3. Verfahren nach einem der vorhergehenden Ansprüche,

   - bei dem das korrigierte Nominalverhältnis $A_{C,j}$ durch folgende Beziehung ($A_j$ ) bestimmt ist:

   $$A_{C,j} = A_j \cdot \sqrt{\frac{15 \cdot N_{pilot,C}}{N_{slots,C} \cdot N_{pilot,N}}},$$

   wobei

   $N_{pilot,C}$ : Anzahl der pilot bits pro slot im Komprimiermodus;

   $N_{pilot,N}$ : Anzahl der pilot bits per slot Normalmodus;

   $N_{slots,C}$ : Anzahl der für die Übertragung der Daten verwendeten slots im komprimierten Rahmen.

**Claims**

1. Method for determining the amplification factors of a data channel and of a control channel of a data transmission system,

   - in which the data transmission is performed in a normal mode or a compression mode,
   - in which a nominal ratio is calculated in the normal mode from signalled reference amplification factors for a Reference Transport Format Combination TFC, and amplification factors for a jth TFC are determined therefrom by means of rounding, **characterized in that**
   - a corrected nominal ratio is calculated from the nominal ratio in the compression mode, and rounded or discretized amplification factors are determined therefrom by means of rounding or discretization.

2. Method according to Claim 1,

   - in which the nominal ratio $A_j$ is determined by the following relationship:

   $$A_j = \frac{\beta_{d,ref}}{\beta_{c,ref}} \cdot \sqrt{\frac{L_{ref}}{L_j}} \sqrt{\frac{K_j}{K_{ref}}},$$

   wherein:

   $\beta_{c,ref}$, $\beta_{d,ref}$ are signalled reference amplification factors for the reference TFC;
   $\beta_{c,j}$, $\beta_{d,j}$ are amplification factors for the jth TFC;
   $L_{ref}$ is the number of DPDCHs used for the reference TFC;
   $L_j$ is the number of DPDCHs used for the jth TFC;
   $K_{ref}$ is a measure of power demand per DPDCH of the reference TFC, which essentially takes account of the data rates, coding gains and transmission quality requirements of the data streams jointly transmitted in the relevant TFC; and
   $K_j$ is a measure of power demand per DPDCH of the jth TFC, which essentially takes account of the data rates, coding gains and transmission quality requirements of the data streams jointly transmitted in the relevant TFC.

3. Method according to one of the preceding claims,

   - in which the corrected nominal ratio $A_{c,j}$ is determined by the following relationship (Aj):

   $$A_{C,j} = A_j \cdot \sqrt{\frac{15 \cdot N_{pilot,C}}{N_{slots,C} \cdot N_{pilot,N}}},$$

   wherein
   $N_{pilot,C}$ is the number of pilot bits per slot in the compression mode;
   $N_{pilot,N}$ is the number of pilot bits per slot normal mode; and
   $N_{slots,C}$ is the number of slots in the compressed frame used for transmitting the data.

**Revendications**

1. Procédé pour calculer les facteurs d'amplification d'un canal de données et d'un canal de contrôle d'un système de transmission de données,

   - selon lequel la transmission de données s'effectue dans un mode normal ou dans un mode de compression,
   - selon lequel, en mode normal, un rapport nominal est calculé à partir de facteurs d'amplification de référence signalés pour une Transport Format Combination TFC de référence et à partir duquel des facteurs d'amplification pour une *j-ième* TFC sont déterminés par arrondi,

   **caractérisé en ce que**

   - en mode de compression, un rapport nominal corrigé est calculé à partir du rapport nominal, et à partir de là des facteurs d'amplification arrondis ou discrétisés sont déterminés par arrondi ou discrétisation.

2. Procédé selon la revendication 1,

   - selon lequel le rapport nominal $A_j$ est déterminé par la relation suivante :

   $$A_j = \frac{\beta_{d,ref}}{\beta_{c,ref}} \cdot \sqrt{\frac{L_{ref}}{L_j}} \sqrt{\frac{K_j}{K_{ref}}}$$

   $\beta_{c,ref}$, $\beta_{d,ref}$ représentant des facteurs d'amplification de référence signalés pour TFC de référence ;
   $\beta_{c,j}$, $\beta_{d,j}$ étant des facteurs d'amplification pour la *j-ième* TFC ;
   $L_{ref}$ étant le nombre des DPDCH utilisés pour la TFC de référence ;
   $L_j$ le nombre des DPDCH utilisés pour la *j-ième* TFC ;
   $K_{ref}$ la cote pour le besoin de puissance par DPDCH des TFC de référence, qui prend en compte essentiellement les débits de données, les gains de codage et exigences de qualité de transmission des flux de données transmis en commun dans la TFC importante ;

$K_j$ étant la cote pour le besoin de puissance par DPDCH de la *j-ième* TFC, qui prend en compte essentiellement les débits de données, les gains de codage et exigences de qualité de transmission des flux de données transmis ensemble dans la TFC importante.

3.  Procédé selon l'une quelconque des revendications précédentes,

    - selon lequel le rapport nominal $A_{c,j}$ corrigé est déterminé par la relation suivante ($A_j$) :

$$A_{C,j} = A_j \cdot \sqrt{\frac{15 \cdot N_{pilot,C}}{N_{slots,C} \cdot N_{pilot,N}}}$$

$N_{pilot,C}$ étant le nombre des pilot bits par slot en mode de compression ;

$N_{pilot,N}$ étant le nombre des pilot bits par slot en mode normal ;

$N_{slots,C}$ étant le nombre des slots utilisés pour la transmission des données dans le cadre comprimé.